# NOUVEAU FASCICULE DE BREVET EUROPEEN

(11) **EP 0 706 496 B2**
(45) Date de publication et mention de la décision concernant l'opposition: **08.03.2006**
(45) Mention de la délivrance du brevet: 19.03.1997
(21) Numéro de dépôt: 94921001.7
(22) Date de dépôt: 30.06.1994
(51) Int. Cl.: C01B 33/025, C07F 7/16

(54) **SILICIUM METALLURGIQUE CONTENANT DU PHOSPHORE POUR LA PREPARATION D'ORGANOHALOGENOSILANES**
PHOSPHORHALTIGES, METALLURGISCHES SILIZIUM ZUR HERSTELLUNG VON ORGANOHALOSILANEN
METALLURGICAL SILICON CONTAINING PHOSPHORUS FOR THE PREPARATION OF ORGANOHALOGENOSILANES

(30) Priorité: 01.07.1993 FR 9308303
(43) Date de publication de la demande: 17.04.1996
(73) Titulaire: PECHINEY ELECTROMETALLURGIE, 92400 Courbevoie (FR); GE Bayer Silicones GmbH & Co. KG, 40699 Erkrath (DE)
(72) Inventeur: MARGARIA, Thomas, F-74190 Chedde (FR); DEGEN, Bruno, D-53804 Much (DE); LICHT, Elke, D-51381 Leverkusen (DE); SCHULZE, Manfred, D-42799 Leichlingen (DE); WAGNER, Gebhard, D-51519 Odenthal (DE)
(74) Mandataire: Maureau, Philippe
(86) Numéro de dépôt international: PCT/FR1994/000799
(87) Numéro de publication internationale: WO 1995/001303

(56) Documents cités:
- EP-A- 0 272 860
- EP-A- 0 273 635
- EP-A- 0 372 918
- DE-B- 1 165 026
- FR-A- 2 556 333
- US-A- 4 500 724
- US-A- 4 602 101
- T. MARGARIA ET AL. 'INFACON 6. PROCEEDINGS OF THE 6TH INTERNATIONAL FERROALLOYS CONGRESS. CAPE TOWN. Vol. 1 Johannesburg,SAIMM' 1992 cité dans la demande voir page 209 - page 214
- CHEMICAL ABSTRACTS, vol. 60, no. 8, 13 Avril 1964, Columbus, Ohio, US; abstract no. 9312b,
- JOURNAL OF GENERAL CHEMISTRY USSR, vol.34, no.8, Août 1964, NEW YORK US pages 2727 - 2729 N.P. LOBUSEVICH ET AL. cité dans la demande

## Description

### DOMAINE TECHNIQUE

L'innovation concerne une qualité particulière de silicium métallurgique à structure contrôlée et contenant une quantité contrôlée de phosphore dont la répartition dans les différentes phases constituant la structure du silicium métallurgique est elle-même contrôlée.

Cette qualité est en particulier très bien adaptée à la réaction de synthèse des alkyl ou aryl halogénosilanes.

### ETAT DE LA TECHNIQUE

La synthèse des alkyl ou aryl halogénosilanes (que nous appellerons dans la suite "silanes") par réaction à une température de 250 à 350°C d'un hydrocarbure halogéné sur du silicium en présence d'un catalyseur à base de cuivre est connue depuis le brevet américain US 2 380 995 délivré le 7 août 1945 à Rochow

Cette réaction, que nous appellerons "réaction de Rochow", a atteint un développement industriel considérable, étant en particulier à la base de toute l'industrie des silicones.

Cette réaction se pratique en général avec le chlorure de méthyle, CH3CI et conduit à un mélange de différents méthyl chlorosilanes, en particulier le monométhyltrichlorosilane CH₃SiCl₃ (que nous appellerons par la suite T) et le diméthyldichlorosilane (CH₃)₂SiCl₂ (que nous appellerons par la suite D). Le produit le plus recherché étant D, il est très important de pouvoir conduire la réaction de façon à obtenir la proportion maximale de D, dans le mélange de silanes obtenu, rapport appelé la sélectivité. Il est également très important de pouvoir produire la qualité maximale de silanes par unité de temps, la valeur du flux pondéral de silanes produits étant appelée réactivité.

Depuis le brevet initial de Rochow de 1945, une très importante quantité de travail a été consacrée à l'augmentation de la réactivité et de la sélectivité dans la réaction de Rochow. Les recherches ont été menées sur la technologie du procédé, qui, réalisé en lit fixe à l'origine; l'est maintenant presque toujours en lit fluide, sur la forme physique du silicium utilisé (granulométrie, etc...), et surtout sur les systèmes catalytiques employés, et sur la composition chimique du silicium, celui-ci étant un produit industriel qui contient un certain nombre d'impuretés.

Le brevet américain US 4 602 101 délivré le 22 juillet 1986 à Halm et al. établit (colonnes 1 à 4) un état des connaissances assez complet sur les systèmes catalytiques étudiés. Cet état montre qu'un certain nombre d'éléments ou de composés ont été décrits comme catalyseurs de la réaction de Rochow, tandis que d'autres ont été signalés comme cocatalyseurs ou promoteurs parce que leur utilisation, conjointement à certains catalyseurs permet d'améliorer la sélectivité ou/et la réactivité.

Le catalyseur d'origine, le cuivre, est le plus cité et est universellement utilisé. Sont cependant cités également comme catalyseurs le nickel, l'antimoine, le manganèse, l'argent, le titane et le fer. Le cuivre peut être utilisé soit sous forme métallique, soit sous forme d'oxydes (éventuellement formés in situ à partir d'autres dérivés tels que nitrate de cuivre), soit sous forme d'halogénures.

A ces catalyseurs, ou à certains d'entre eux, on peut ajouter comme promoteurs soit des éléments tels que :
- le zinc, le cadmium, le mercure ;
- l'étain, en particulier en présence de cuivre ou de cuivre et de zinc ;
- les métaux du groupe VII de la classification périodique des éléments ;
- le phosphore ou certains dérivés phosphorés.

soit des composés, tels que :
- des oxydes de cuivre ou d'autres métaux catalyseurs ;
- des hydroxydes de métaux du groupe IV de la classification périodique des éléments, utilisés avec le cuivre;
- des oxydes réfractaires hydratés, par exemple des alumines hydratées, utilisées avec le cuivre
- des halogénures de cuivre, de fer, de zinc, ou d'autres sels de cuivre (formiate), utilisés avec le cuivre et/ou ses oxydes, parfois avec le fer.

Parmi ces catalyseurs et ces promoteurs, certains présentent un intérêt particulier, le cuivre comme catalyseur, le zinc, l'étain et le phosphore comme promoteurs.

Dès le 19 janvier 1954, date de publication du brevet US 2 666 776 (Nitzsche et al.), l'influence bénéfique du phosphore comme cocatalyseur ou promoteur était reconnue : colonne 1, lignes 26-37 où il est indiqué que des alkyl ou aryl halogénures de silicium, en particulier des dialkyl ou diarylhalogénosilanes sont obtenus si on utilise un alliage qui contient outre le silicium et le cuivre un métal des 5ème ou 8ème groupes de la classification périodique en particulier cobalt, nickel, fer ou phosphore et qu'une augmentation supplémentaire de l'efficacité est obtenue si le catalyseur est utilisé en relation avec un agent activant par exemple un sel de cuivre.

L'importance du phosphore a été confirmée d'abord par Rossmy dans son brevet allemand 1 165 026 déposé le 14 septembre 1959 et délivré le 12 mars 1964, puis par Trofimova dans une demande soviétique n° 754 859 déposée le 8 décembre 1961, ayant donné lieu à la délivrance d'un certificat d'invention n° 157 349, ledit certificat étant mentionné dans "Soviet Invention Illustrated" numéro de février 1966. Ce certificat mentionne l'utilisation d'un alliage silicium-cuivre contenant aussi de l'antimoine et du phosphore. Un exemple précise une teneur en cuivre de 10%, en antimoine de 40 ppm et en phosphore de 200 ppm.

Dans un article publié dans Zhurnal Obshchei Khimii, Vol 34, n° 8, p. 2 706 à 2 708 (août 1964), Lobusevich, Trofimova et al montrent que le phosphore utilisé seul en présence de cuivre comme catalyseur est un poison de la réaction mais qu'en présence d'autres promoteurs, antimoine, arsenic, zinc, il apporte au contraire une amélioration en sélectivité. Cet effet positif est optimum pour un taux de phosphore compris entre 100 et 200 ppm.

Depuis ces publications, on a cherché à utiliser le phosphore comme promoteur dans la réaction de Rochow et différentes formules et techniques ont été décrites, par exemple :
- Ward, dans son brevet américain n° 4 500 724 décrit l'utilisation de formules complexes comprenant cuivre (ou chlorure de cuivre), zinc, étain et phosphore, donnant des résultats en réactivité et sélectivité particulièrement intéressants ;
- Halm, dans son brevet américain 4 602 101 déjà cité, décrit l'utilisation dans la réaction de Rochow, en présence d'étain et de cuivre, d'une quantité de 25 à 2 500 ppm par rapport au silicium d'un promoteur choisi parmi le phosphore élémentaire, des phosphures métalliques, ou des composés capables de former des phosphures métalliques dans les conditions de la réaction ;

Pour des raisons économiques, le silicium généralement utilisé dans la réaction de Rochow est le silicium métallurgique, produit par carboréduction de la silice dans un four électrique, puis affiné pour régler le taux de ses principales impuretés, et enfin coulé en pains et solidifié. La masse solide est ensuite réduite en poudre de granulométrie adaptée à l'utilisation dans les installations industrielles de production des silanes. Les monographies concernant cette technique de production du silicium sont nombreuses, on en trouvera une, par exemple, dans le chapitre II "Silicon Alloys" de l'ouvrage d'Elyutin et al "Production of Ferroalloys-Electrometallurgy" Publié en anglais à Moscou en 1957 par "The State Scientific and Technical Publishing House for Litterature on Ferrous and Non Ferrous Metallurgy".

Ce silicium métallurgique contient un certain nombre d'impuretés principales, essentiellement calcium, aluminium, fer qui sont présentes chacune à des taux compris entre 0,01 et 1 %, taux réglés au cours du processus d'affinage pour satisfaire les spécifications requises par le marché. II contient également des impuretés secondaires apportées par les matières premières, et que le procédé de production et d'affinage ne permet pas toujours d'éliminer. Ces impuretés, ainsi que leur taux de présence dans le silicium, en général compris entre 10 et 500 ppm, dépendent très fortement de l'origine des matières premières utilisées. Les plus habituelles de ces impuretés sont des métalloïdes, phosphore, bore, soufre, carbone, ou des métaux, titane, cuivre, magnésium, manganèse, nickel, vanadium, zirconium, etc ...

La teneur en phosphore, ainsi qu'il est exposé dans le chapitre II de l'ouvrage d'Elyutin déjà cité, p. 65 à 68, a pour origine les différentes matières premières utilisées dans la production du silicium métallurgique et il est en particulier montré comment, à partir de la teneur en phosphore des différentes matières premières, on peut déterminer celle du silicium produit. Les teneurs en phosphore habituellement rencontrées varient entre 25-30 ppm et 400-500 ppm. L'article "High-Purity, silicon for solar cell application" de Dosaj et al. publié par le Journal of Metals, juin 1978, donne p. 12, dans sa table VII, une valeur de 50 ppm, l'article "Efficient Polycristalline Solar Cells Made from low-cost Refined Metallurgical Silicon", de Haneka et al., Thirteenth IEEE Photovoltaic Specialists Conference-1978, pages 485-9, publié par l'IEEE, New York, en 1978, indique page 487, dans sa table 1, une valeur de 100 ppm et l'ouvrage d'Elyutin, déjà cité indique, page 67, une valeur de 400 ppm.

Il est donc tout à fait certain que le phosphore présent dans le silicium a, depuis l'origine de la production des silanes, apporté sa contribution à la catalyse de la réaction de Rochow, contribution variable et souvent aléatoire selon la teneur en phosphore du silicium utilisé, mais contribution effective chez tous les producteurs de silanes.

Récemment, Dosaj,Halm et Wilding ont obtenu le brevet européen 0 272 860, délivré le 7 octobre 1992 tandis qu'Halm et Wilding ont obtenu le brevet européen 0 273 635, délivré le 10 février 1993. Ces deux brevets décrivent l'utilisation dans la réaction de Rochow, en présence d'un catalyseur contenant du cuivre et de l'étain, et éventuellement du zinc, d'un silicium contenant de 25 à 2 500 ppm d'un promoteur phosphoré. Dans le brevet 0 272 860, ce promoteur est introduit dans le silicium par le choix et le dosage des matières premières selon la méthode décrite dans le chapitre Il p. 65 à 68 de l'ouvrage d'Elyutin déjà cité, tandis que dans le brevet 0 273 635, le promoteur est tout simplement un composé phosphoré non volatil ajouté au silicium liquide au cours de son affinage.

Cependant, ces techniques ne sont pas satisfaisantes car il est apparu que deux échantillons de silicium obtenus par l'une de ces deux techniques et contenant la même quantité de phosphore pouvaient apporter des modifications très différentes à la sélectivité et à la réactivité de la réaction de Rochow, ainsi qu'il sera montré ci-dessous.

### DESCRIPTION DE L'INVENTION

Au cours d'une recherche destinée à supprimer ou au moins à réduire ces irreproductibilités, la demanderesse a trouvé que le silicium métallurgique était constitué de diverses phases dont la principale est une phase silicium cristallisé très pure, appelée ci-dessous silicium primaire dans laquelle ne peuvent exister que deux impuretés dissoutes, le bore et le phosphore, les autres phases étant constituées de diverses combinaisons du silicium et des impuretés principales et secondaires.

La demanderesse a également trouvé que le phosphore présent dans le silicium métallurgique se répartissait entre les différentes phases présentes, en particulier entre la phase dominante de silicium primaire et, quand elle existe, une phase ternaire Si₂Al₂Ca.

L'invention a pour objet un procédé de préparation d'un silicium métallurgique pour la synthèse des alkyl- et aryl halogénosilanes, contenant globalement de 30 à 180 ppm de phosphore, constitué d'une phase cristalline de silicium primaire à teneur en phosphore dissous comprise entre 30 et 150 ppm et de phases intermétalliques dont le taux global est compris entre 0,5 et 2%, dans lequel le taux global de phosphore contenu est réglé d'une part par la quantité de phosphore apporté par les matières premières, et/ou d'autre part par la quantité de phosphore ajouté au silicium liquide sous forme de composé phosphoré non volatil, caractérisé en ce que la formation de la phase Si₂Al₂Ca dans le silicium solidifié est limitée à moins de 0,3% du poids de silicium en ajustant simultanément deux rapports pondéraux :
a) le rapport de la somme des teneurs en aluminium et en calcium à la teneur en fer du silicium : (Al + Ca)/Fe à une valeur comprise entre 0,7 et 0,9 pour les vitesses de solidification lentes, c'est-à-dire telles que la vitesse de diminution de température entre 1000 et 800°C soit comprise entre 6 et 30°C/mn, ou à une valeur comprise entre 0,5 et 0,7 pour les vitesses de solidification rapide, c'est-à-dire telles que la vitesse de diminution de température entre 1000 et 800°C soit comprise entre 30 et 120°C/mn
b) le rapport de la teneur en aluminium à celle du calcium : Al/Ca à une valeur comprise entre 2,5 et 4,5, de préférence entre 3,3 et 3,7.

Les différentes phases intermétalliques pouvant exister dans le silicium métallurgique, en plus de la phase dominante de silicium primaire, ont été décrites par Margaria et al dans "Proceedings of the 6th International Ferroalloys Congress Cape Town", vol. 1 Johannesburg, SAIMM, 1992, pp. 209 à 214. Elles sont au nombre de 7 phases principales auxquelles s'ajoutent des phases secondaires dépendant des impuretés secondaires effectivement présentes, dont seulement une (Si₂Al₂Ca) est capable d'inclure des quantités notables de phosphore, ainsi que le montrent les tables I et II, p. 210. Cet article montre comment se créent, au cours du processus de solidification du silicium métallurgique, ces phases intermétalliques et comment elles se déposent aux joints de grain de la phase dominante. Il donne également, p. 210, un moyen d'analyse qui, à partir d'images de microscopie électronique et de diffraction X, permet de trouver la répartition spatiale des différentes phases et leur composition.

Ces mêmes techniques combinées à un traitement mathématique complexe, peuvent être utilisées pour évaluer le taux respectif de chacune des phases dans le silicium métallurgique étudié. D'une façon générale, le taux global de l'ensemble des phases intermétalliques est compris entre 0,5 et 2 % et dépend essentiellement des taux des impuretés principales qui sont réglés au cours du processus d'affinage.

La quantité totale de phosphore introduit dans le silicium métallurgique au cours de sa préparation, soit par les matières premières, soit par tout autre ajout, se répartit, comme indiqué dans l'article de Margaria cité ci-dessus entre la phase dominante et la phase Si₂Al₂Ca, les autres phases intermétalliques ne pouvant pas en accepter des fractions significatives. On a ainsi trouvé par exemple dans un silicium métallurgique contenant globalement 200 ppm de phosphore, que la phase dominante de silicium primaire en contenait 50 ppm alors que la phase Si₂Al₂Ca présente au taux de 1,5 %, contenait 10 000 ppm de phosphore.

La demanderesse a trouvé que, de façon surprenante, les quantités de phosphore contenues dans la phase dominante et dans la phase Si₂Al₂Ca n'avaient pas la même action sur la modification de la sélectivité et de la réactivité de la réaction de Rochow. Le silicium contenu dans la phase dominante de silicium primaire a une action bénéfique sur la sélectivité et la réactivité, sous réserve que son taux soit compris entre 30 et 150 ppm, son action étant insignifiante au-dessous de 30 ppm et devenant néfaste, en dégradant la sélectivité, au fur et à mesure que le taux augmente au-delà de 150 ppm. Ces résultats sont à rapprocher de ceux obtenus par Lobusevich et Trofimovà dans l'article cité ci-dessus, le phosphore étant apparemment alors ajouté au moment de la réaction et non pas dans le silicium utilisé.

Le phosphore contenu dans la phase Si₂Al₂Ca n'a, par contre, pas d'action positive par lui-même. Par contre, il intervient dans la dégradation de la sélectivité qui semble en réalité dépendre de la quantité de phosphore totale contenue dans le silicium métallurgique.

En résumé, un silicium métallurgique de même composition chimique globale, en particulier en ce qui concerne son taux de phosphore, donnera des résultats très différents dans la réaction de Rochow, selon la répartition du phosphore qu'il contient entre la phase dominante de silicium primaire et la phase intermétallique Si₂Al₂Ca, les autres phases intermétalliques n'ayant pas d'incidence notable.

Le silicium conduisant aux meilleurs résultats dans la réaction de Rochow est un silicium contenant entre 30 et 180 ppm de phosphore. La quasi totalité de ce phosphore est incluse dans la phase dominante de silicium primaire. Le reste, soit au maximum environ 30 ppm est lié à la phase Si₂Al₂Ca qui peut en contenir 10 000 ppm mais dont la teneur est limitée à 0,3% du poids de silicium. Ce résultat est accessible en contrôlant la quantité globale de phosphore introduit dans le silicium métallurgique par ses matières premières, ainsi que la quantité éventuellement ajoutée spécifiquement au silicium liquide pendant sa fabrication, la coulée du four, son raffinage, ou sa coulée définitive, et en contrôlant de plus la formation de la phase Si₂Al₂Ca de façon à la limiter au maximum, par exemple au-dessous de 0,3 %, de préférence au-dessous de 0,1 %.

Pour obtenir un tel silicium, on peut utiliser le procédé habituel de fabrication du silicium métallurgique par carboréduction de silice au four électrique, les matières premières étant choisies par la méthode décrite dans l'ouvrage d'Elyutin et al cité ci-dessus de façon à conférer au produit obtenu un taux global de phosphore déterminé, taux susceptible d'être ajusté à la valeur choisie entre 30 et 180 ppm par l'ajout à un moment quelconque au silicium liquide d'un composé non volatil du phosphore, tel que le phosphate tricalcique.

Ce silicium est alors raffiné en phase liquide par un traitement classique à l'aide d'un agent oxydant, par exemple l'oxygène ou l'air, qui élimine en partie certaines impuretés les plus oxydables, comme l'aluminium et le calcium, la majorité des impuretés, notamment le phosphore n'étant pas affectées et demeurant dans la phase liquide.

Il est alors coulé sous forme de lingots qui comportent ainsi qu'on l'a vu ci-dessus une phase dominante de silicium primaire ne contenant comme impureté que du phosphore et du bore et différentes phases intermétalliques situées au joint de grain de la phase dominante.

Pour contrôler l'apparition de la phase Si₂Al₂Ca et la limiter à 0,3 %, de préférence 0,1 %, on peut se contenter de refroidir la masse coulée très lentement, en particulier pendant le passage de la zone sensible de 1200°C à 800°C, comme indiqué dans l'article de Margaria cité ci-dessus, page 213. Cependant cette technique présente des inconvénients industriels, par sa lenteur et par le fait qu'elle conduit dans un lingot massif à une structure trop hétérogène.

Pour obtenir la structure recherchée (limitation de la phase Si₂Al₂Ca à 0,3 % et de préférence à 0,1 %) dans la totalité de la masse solidifiée et en utilisant des procédés de solidification industriels, on respectera simultanément deux conditions : l'une consiste à régler dans un domaine bien précis les taux des impuretés Fe, Al, Ca dans le silicium ; l'autre consiste à fixer les conditions de solidification. En général on choisira le domaine de composition en fonction des vitesses de solidification effectivement réalisées.

Le résultat recherché est obtenu en ajustant simultanément deux rapports pondéraux :
- le rapport de la somme des pourcentages pondéraux de l'aluminium et du calcium au pourcentage pondéral du fer dans le silicium (Al + Ca)/ Fe. Ce rapport devra être compris entre 0,7 et 0,9 pour les vitesses de solidification lentes, c'est-à-dire telles que la vitesse de diminution de température entre 1000°C et 800°C soit comprise entre 6 et 30°C/min. Ce rapport devra être compris entre 0,5 et 0,7 pour les vitesses de solidification rapides, c'est-à-dire telles que la vitesse de diminution de température entre 1000°C et 800°C soit comprise entre 30 et 120°C/min.
- le rapport du pourcentage pondéral de l'aluminium à celui du calcium dans le silicium : Al / Ca, qui devra être compris entre 2,5 et 4,5 et de préférence compris entre 3,3 et 3,7.

Cet ajustement de ces deux rapports pondéraux peut se faire de façon avantageuse au cours de l'affinage oxydant du silicium, consistant à injecter dans le silicium fondu de l'air et/ou de l'oxygène. Cet affinage diminue les teneurs en calcium et en aluminium en réglant la quantité et la durée d'action du produit oxydant, jusqu'à arriver aux rapports pondéraux souhaités et en rajoutant si nécessaire l'un de ces deux éléments si l'élimination en a été trop poussée.

Le silicium dont les caractéristiques et le procédé de fabrication ont été décrits ci-dessus trouve son application dans la réaction directe dite de Rochow de fabrication d'alkyl- ou aryl-halogéno silanes, par réaction avec des halogénures d'alkyle ou d'aryle à une température comprise entre 250 et 350°C, en présence d'un catalyseur contenant du cuivre et éventuellement un ou plusieurs promoteurs : étain, zinc, antimoine.

### EXEMPLES

### Exemple 1

### Production d'un Si contenant des teneurs trop importantes de Si₂Al₂Ca

Le silicium est élaboré par carbothermie au four de réduction à partir de silices et des réducteurs: houilles, cokes, bois, charbons de bois. Ce silicium de départ contient, compte tenu des matières premières utilisées, 0,28 % de Fer, 0,7 % de Ca, 0,6 % d'Aluminium et 90 ppm de Phosphore.

Ce silicium est ensuite soumis à un affinage oxydant en poche par addition de silice et injection d'air et/ou d'oxygène destiné à diminuer les teneurs en Calcium et Aluminium. On obtient ainsi un Silicium contenant 0,28 % de Fer, 0,080 % de Calcium, 0,12 % d'Al. Le phosphore non affecté par l'affinage conserve une teneur de 90 ppm. On ajoute ensuite 1,6 kg d'Aluminium et 0,5 kg d'un alliage CaSi à 30 % de Calcium par tonne de Si liquide. L'alliage liquide homogénéisé par insufflation d'azote est ensuite coulé et solidifié d'une part en lingots d'épaisseur de 10 cm et d'autre part en lingots d'épaisseur de 20 cm dans des lingotières en fonte.
Après échantillonnage représentatif du Silicium solide, l'analyse montre que ce Silicium contient 0,31 % de Fer, 0,26 % d'Aluminium, 0,09 % de Calcium, 90 ppm de Phosphore.
Compte tenu de ces analyses, on a d'une part (Al + Ca)/Fe = 1,13, et Al/Ca = 2,8.

Le Silicium ainsi obtenu est examiné sur coupe polie à l'aide d'un microscope électronique à balayage couplé à un système d'analyse d'image.
On peut ainsi identifier la phase Si₂Al₂Ca parmi les différents intermétalliques et en déterminer la proportion.

Les résultats de ces examens montrent que la teneur globale de la phase Si₂Al₂Ca est de 0,15 % et peut atteindre localement 0,3 % dans le silicium coulé en lingots d'épaisseur 20 cm et a une teneur globale de 0,2 % pouvant atteindre localement 0,4 % dans le silicium coulé en lingots d'épaisseur 10 cm. Les microanalyses effectuées à l'aide d'une microsonde électronique montrent que la teneur en P de la phase Si₂Al₂Ca atteint 1,2 % et que le cristal de Silicium primaire a des teneurs en Phosphore variant de 50 à 70 ppm pour le silicium coulé en lingots d'épaisseur 20 cm et des teneurs variant de 40 à 60 ppm pour le silicium coulé en lingots d'épaisseur 10 cm.

### Exemple 2

### Production d'un Silicium selon l'invention contenant peu de Si₂Al₂Ca

On élabore au four de réduction puis par affinage comme précédemment décrit un silicium contenant 0,35 % de Fer, 0,05 % de Calcium, 0,12 % d'Al. On ajoute ensuite par tonne de Silicium liquide 1,4 kg d'Aluminium et 0,6 kg d'un alliage CaSi à 30 % de Ca. L'alliage liquide homogénéisé par insufflation d'azote est ensuite coulé et solidifié en lingots d'épaisseur 10 et 20 cm en lingotières en fonte.

Après échantillonnage représentatif du Silicium solide, l'analyse montre que ce Silicium contient 0,35 % de Fer, 0,25 % d'Aluminium, 0,06 % de Calcium, 90 ppm de Phosphore.

Compte tenu de ces analyses, on a d'une part (Al + Ca)/Fe = 0,88, et Al/Ca = 4,2 Les examens décrit précédemment montrent que la phase Si₂Al₂Ca est absente du silicium coulé en lingots d'épaisseur 20 cm et a une teneur globale de 0,1 % pouvant atteindre localement 0,2 % dans le silicium coulé en lingots d'épaisseur 10 cm.

Les microanalyses du Silicium montrent que le cristal de Silicium primaire a des teneurs en Phosphore de 90 ppm pour le silicium coulé en lingots d'épaisseur 20 cm et des teneurs variant de 55 à 70 ppm pour le silicium coulé en lingots d'épaisseur 10 cm.

### Exemple 3

### Production d'un Silicium selon l'invention ne contenant pas de Si₂Al₂Ca

On élabore au four de réduction puis par affinage comme précédemment décrit un silicium contenant 0,37 % de Fer, 0,05 % de Calcium, 0,10 % d'Al. On ajoute ensuite par tonne de Silicium liquide 1 kg d'Aluminium et 0,6 kg d'un alliage CaSi à 30 % de Ca. L'alliage liquide homogénéisé par insufflation d'azote est ensuite coulé et solidifié en lingots d'épaisseur de 10 et 20 cm en lingotières en fonte.

Après échantillonnage représentatif du Silicium solide, l'analyse montre que ce Silicium contient 0,37 % de Fer, 0,19 % d'Aluminium, 0,06 % de Calcium et 90 ppm de Phosphore.

Compte tenu de ces analyses, on a d'une part (Al + Ca)/Fe = 0,67 et Al/Ca = 3,2, valeurs conformes aux recommandations de la présente invention.

Le même examen que celui effectué dans les 2 exemples précédents n'a pas permis de détecter la présence de la phase Si₂Al₂Ca ni dans le silicium coulé en lingots d'épaisseur 20 cm ni dans le silicium coulé en lingots d'épaisseur 10 cm.

Les microanalyses du Silicium montrent que les cristaux de Silicium primaire contiennent de 85 à 90 ppm de Phosphore dans les 2 cas : la totalité du silicium primaire contient donc effectivement la concentration recherchée en Phosphore.

### Exemple 4

Cet exemple montre l'intérêt de la présence d'une quantité suffisante de phosphore dans la phase primaire, obtenue par l'absence de la phase Si2A12Ca pour la synthèse de méthylchlorosilanes.
On a comparé deux échantillons de silicium 1 et 2 ayant la même teneur en phosphore : 30 Parties par million, dont les analyses étaient les suivantes :

| Echantillon | 1 | 2 |
|---|---|---|
| Fe (%) | 0,37 | 0,41 |
| Al (%) | 0,4 | 0,17 |
| Ca (%) | 0,18 | 0,054 |
| Ti (%) | 0,024 | 0,028 |
| P (ppm) | 30 | 30 |
| (Al+Ca)/Fe | 1,57 | 0,55 |
| Al/Ca | 2,22 | 3,14 |

L'échantillon 1, en raison de son analyse contient 0,36 % de Si₂Al₂Ca ; le silicium primaire ne contient que 5 à 10 ppm de phosphore et l'échantillon n'est donc pas conforme à l'invention.
L'échantillon 2, en raison de son analyse et de son mode de refroidissement est conforme à l'invention : il ne contient pas de Si₂Al₂Ca et la concentration en phosphore du silicium primaire est égale à la teneur globale soit 30 ppm.

Chacun de ces échantillons a été soumis à un test de fabrication de méthylchlorosilanes dans les conditions suivantes :

Les tests ont été faits dans un réacteur de verre, en lit agité, d'un diamètre de 30 mm et équipé d'un agitateur. La même quantité de silicium ayant la même distribution de tailles de particules, entre 71 et 160 µm était utilisée dans chaque test. Le mélange réactionnel consistait en 40 g de silicium, 3,2 g de cuivre partiellement oxydé comme catalyseur et 0,05 g de ZnO.

Le chlorure de méthyle était envoyé dans le mélange réactionnel, au travers d'un disque de verre fritté sous une pression de 2 bars. La quantité de chlorure de méthyle était maintenue constante à 1,8 litres/h, mesurée sous 2 bars. Après chauffage du milieu réactionnel et démarrage de la réaction, la température du système était ajustée et maintenue à 300°C et la quantité et la composition du mélange de silanes formé était déterminée. Les valeurs indiquées dans le tableau ci-après sont les moyennes de 4 mesures individuelles.

Dans ce tableau, P désigne la quantité de silanes produite en g/heure ; MeH, Mono, T, D, PS, les pourcentages respectifs en poids de monométhyldichlorosilane (CH₃HSiCl₂), de triméthylchlorosilane ((CH₃)₃ SiCl), de méthyltrichlorosilane (CH₃ SiCl₃), de diméthyldichlorosilane ((CH₃)₂SiCl₂) et enfin de polysilanes. Le produit recherché étant le diméthyldichtorosilane, la sélectivité est appréciée par la valeur de D qui doit être la plus élevée possible et par celle de T/D qui doit être la plus faible possible.

| Ech. | P(g/h) | MeH(%) | Mono(%) | T(%) | D(%) | T/D | PS(%) |
|---|---|---|---|---|---|---|---|
| 1 | 7,2 | 2,7 | 3,2 | 7,3 | 86,4 | 0,084 | 4,9 |
| 2 | 6,8 | 2,0 | 2,5 | 4,9 | 90,3 | 0,054 | 5,2 |

On constate le gain de sélectivité obtenu avec l'alliage 2 selon l'invention.

### Exemple 5

Cet exemple montre que les résultats obtenus en synthèse de méthylchlorosilane sont voisins, en dépit de teneurs globales en Phosphore différentes si ces teneurs sont voisines dans la phase Silicium primaire.

On a comparé deux échantillons de silicium 3 et 4 ayant des teneurs en phosphore différentes : 80 et 30 ppm dont les analyses étaient les suivantes :

| Echantillon | 3 | 4 |
|---|---|---|
| Fe (%) | 0,29 | 0,41 |
| Al (%) | 0,32 | 0,17 |
| Ca (%) | 0,17 | 0,054 |
| Ti (%) | 0,019 | 0,028 |
| P (ppm) | 80 | 30 |
| (Al+Ca)/Fe | 1,69 | 0,55 |
| Al/Ca | 1,88 | 3,15 |

L'échantillon 3, en raison de son analyse contient 0,31 % de Si₂Al₂Ca ; le silicium primaire contient 40 ppm de phosphore et l'échantillon n'est donc pas conforme à l'invention.
L'échantillon 4, en raison de son analyse et de son mode de refroidissement est conforme à l'invention : il ne contient pas de Si₂Al₂Ca et la concentration en phosphore du silicium primaire est égale à la teneur totale soit 30 ppm, très proche de celle de l'échantillon 3.

Chacun de ces échantillons a été soumis au même test de fabrication de méthylchlorosilane que celui décrit dans l'exemple 4.

Les résultats figurent dans le tableau ci-après.

| Ech. | P(g/h) | MeH(%) | Mono(%) | T(%) | D(%) | T/D | PS(%) |
|---|---|---|---|---|---|---|---|
| 3 | 6,1 | 1,8 | 2,3 | 5,4 | 90,3 | 0,059 | 3,6 |
| 4 | 6,8 | 2,0 | 2,5 | 4,9 | 90,3 | 0,054 | 5,2 |

On constate que les performances obtenues en sélectivité sont proches l'une de l'autre ce qui est dû au fait que la teneur du silicium primaire en phosphore est voisine pour les deux échantillons. On note en revanche une légère dégradation de la réactivité pour l'échantillon ayant la teneur en phosphore total la plus élevée.

### Exemple 6

Cet exemple permet de comparer des échantillons 5, 6, 7, 8 dont le silicium primaire présente des teneurs croissantes en phosphore. Les trois premiers contiennent la phase primaire Si₂Al₂Ca, le quatrième n'en contient pas.

Le phosphore total (Ptot) et la teneur en phosphore de la phase silicium primaire (Pprim) ont été déterminés.
Les analyses sont les suivantes :

| Echantillon | 5 | 6 | 7 | 8 |
|---|---|---|---|---|
| Fe (%) | 0,37 | 0,29 | 0,29 | 0,38 |
| Al (%) | 0,4 | 0,3 | 0,32 | 0,15 |
| Ca (%) | 0,18 | 0,16 | 0,17 | 0,056 |
| Ti (%) | 0,024 | 0,019 | 0,019 | 0,022 |
| Ptot (ppm) | 30 | 50 | 80 | 90 |
| Pprim (ppm) | 10 | 30 | 50 | 90 |
| (Al+Ca)/Fe | 1,57 | 1,59 | 1,69 | 0,54 |
| Al/Ca | 2,22 | 1,875 | 1,88 | 2,68 |

Les échantillons 5 à 7 ne sont pas conformes à l'invention. Seul, l'échantillon 8 l'est.

Chacun de ces échantillons a été soumis au même test de fabrication de méthylchlorosilane que celui décrit dans l'exemple 4.

Les résultats figurent dans le tableau ci-après.

| Ech. | P(g/h) | MeH(%) | Mono(%) | T(%) | D(%) | T/D | PS(%) |
|---|---|---|---|---|---|---|---|
| 5 | 7,2 | 2,7 | 3,2 | 7,3 | 86,4 | 0,084 | 4,9 |
| 6 | 6,0 | 2,3 | 2,3 | 5,2 | 89,8 | 0,057 | 2,8 |
| 7 | 6,1 | 1,8 | 2,3 | 5,4 | 90,3 | 0,059 | 3,6 |
| 8 | 5,4 | 1,9 | 1,0 | 3,7 | 93,2 | 0,039 | 2,7 |

On constate que les performances obtenues en sélectivité sont particulièrement bonnes pour l'échantillon 8 selon l'invention. On note que les échantillons 7 et 8 dont les teneurs en phosphore total sont voisines présentent des performances différentes, liées aux teneurs différentes en phosphore de leurs phases Si primaire.

## Revendications

1. Procédé de préparation d'un silicium métallurgique pour la synthèse des alkyl- et aryl halogénosilanes, contenant globalement de 30 à 180 ppm de phosphore, constitué d'une phase cristalline de silicium primaire à teneur en phosphore dissous comprise entre 30 et 150 ppm et de phases intermétalliques dont le taux global est compris entre 0,5 et 2%, dans lequel le taux global de phosphore contenu est réglé d'une part par la quantité de phosphore apporté par les matières premières, et/ou d'autre part par la quantité de phosphore ajouté au silicium liquide sous forme de composé phosphoré non volatil, **caractérisé en ce que** la formation de la phase Si₂Al₂Ca dans le silicium solidifié est limitée à moins de 0,3% du poids de silicium en ajustant simultanément deux rapports pondéraux :
a) le rapport de la somme des teneurs en aluminium et en calcium à la teneur en fer du silicium : (Al + Ca)/Fe à une valeur comprise entre 0,7 et 0,9 pour les vitesses de solidification lentes, c'est-à-dire telles que la vitesse de diminution de température entre 1000 et 800°C soit comprise entre 6 et 30°C/mn, ou à une valeur comprise entre 0,5 et 0,7 pour les vitesses de solidification rapide, c'est-à-dire telles que la vitesse de diminution de température entre 1000 et 800°C soit comprise entre 30 et 120°C/mn
b) le rapport de la teneur en aluminium à celle du calcium : Al/Ca à une valeur comprise entre 2,5 et 4,5.

2. Procédé de préparation de silicium métallurgique selon la revendication 1, **caractérisé en ce que** le rapport Al/Ca est ajusté à une valeur comprise entre 3,3 et 3,7.

## Patentansprüche

1. Verfahren zur Herstellung von einem insgesamt 30 bis 180 ppm Phosphor enthaltenden metallurgischem Silizium für die Synthese von Alkyl- und Arylhalogensilanen, das aus einer kristallinen Phase von Primärsilizium mit einem Gehalt an gelöstem Phosphor im Bereich zwischen 30 und 150 ppm und aus intermetallischen Phasen, deren Gesamtanteil im Bereich zwischen 0,5 und 2% liegt, besteht, bei dem der Gesamtanteil des enthaltenen Phosphors einerseits durch die Menge von mit den Ausgangsstoffen eingebrachtem Phosphor und/oder andererseits durch die Menge von dem flüssigen Silizium in Form einer nicht-flüchtigen Phosphorverbindung zugesetztem Phosphor reguliert wird, **dadurch gekennzeichnet, dass** die Bildung der Phase Si₂Al₂Ca im erstarrten Silizium auf weniger als 0,3 % des Gewichts des Siliziums begrenzt wird, indem man gleichzeitig zwei Gewichtsverhältnisse einstellt:
a) das Verhältnis der Summe des Aluminium-und des Calciumgehalts zum Eisengehalt des Siliziums: (Al + Ca)/Fe auf einen Wert im Bereich von 0,7 bis 0,9 für die langsamen Erstarrungsgeschwindigkeiten, d.h. solche, bei denen die Temperaturabnahmegeschwindigkeit zwischen 1000 und 800 °C im Bereich von 6 bis 30 °C/min liegt, oder auf einen Wert im Bereich von 0,5 bis 0,7 für die raschen Erstarrungsgeschwindigkeiten, d.h. solche, bei denen die Temperaturabnahmegeschwindigkeit zwischen 1000 und 800 °C im Bereich von 30 bis 120 °C/min liegt;
b) das Verhältnis des Aluminiumgehalts zum Calciumgehalt: Al/Ca auf einen Wert im Bereich von 2,5 bis 4,5.

2. Verfahren zur Herstellung von metallurgischem Silizium nach Anspruch 1, **dadurch gekennzeichnet, dass** das Verhältnis Al/Ca auf einen Wert im Bereich von 3,3 bis 3,7 eingestellt wird.

## Claims

1. Process for the preparation of metallurgical silicon for the synthesis of alkyl- and aryl-halogenosilanes, containing from 30 to 180 ppm overall of phosphorus, consisting of a primary crystalline silicon phase with a dissolved phosphorus concentration between 30 and 150 ppm and of intermetallic phases of which the overall concentration is between 0.5 and 2%, in which the overall concentration of phosphorus contained is adjusted on the one hand by the quantity of phosphorus provided by the raw materials and, on the other hand, by the quantity of phosphorus added to the liquid silicon in the form of a non-volatile phosphorus-containing compound, **characterized in that** formation of the Si₂Al₂Ca phase in the solidified silicon is limited to less than 0.3% of the weight of silicon by simultaneously adjusting two weight ratios:
a) the ratio of the sum of the aluminium and calcium concentrations to the iron concentration of the silicon, (Al+Ca)/Fe, to a value between 0.7 and 0.9 for slow solidification rates, that is to say such that the temperature falls from 1000 to 800°C at a rate of between 6 and 30°C/min, or at a value between 0.5 and 0.7 for rapid solidification rates, that is to say such that the temperature falls from 1000 to 800°C at a rate of 30 to 120°C/min
b) the ratio of the aluminium concentration to that of calcium, Al/Ca, has a value between 2.5 and 4.5.

2. Process for the preparation of metallurgical silicon according to claim 1, **characterized in that** the Al/Ca ratio is adjusted to a value between 3.3 and 3.7.
